# EUROPEAN PATENT APPLICATION

(11) **EP 4 757 025 A1**
(43) Date of publication of application: **10.06.2026**
(21) Application number: 24847592.3
(22) Date of filing: 21.03.2024
(51) Int. Cl.: H01M 50/209, H01M 50/24, H01M 50/249

(54) **BATTERY PACK AND VEHICLE**

(30) Priority: 02.08.2023 CN 202322066185 U
(71) Applicant: BYD Company Limited, Shenzhen, Guangdong 518118 (CN)
(72) Inventor: CAI, Chen, Shenzhen, Guangdong 518118 (CN); KANG, Weiqing, Shenzhen, Guangdong 518118 (CN); GONG, Xubin, Shenzhen, Guangdong 518118 (CN); ZHANG, Zhonglin, Shenzhen, Guangdong 518118 (CN); ZHOU, Yanfei, Shenzhen, Guangdong 518118 (CN)
(74) Representative: Mathys & Squire
(86) International application number: PCT/CN2024/083027
(87) International publication number: WO 2025/025626

(57) **Abstract**

A battery pack and a vehicle. The battery pack comprises: a first battery group (10), a second battery group (20), a first case body (50), and a second case body (60). The first case body (50) and the second case body (60) are stacked, the first case body (50) has a first cavity (30), the first battery group (10) is accommodated in the first cavity (30), the second case body (60) has a second cavity (40), and the second battery group (20) is accommodated in the second cavity (40).

## Description

### CROSS-REFERENCE TO RELATED APPLICATIONS

The present disclosure claims priority to Chinese Patent Disclosure No. 202322066185.3 filed on August 2, 2023 and entitled "BATTERY PACK AND VEHICLE", which is incorporated herein by reference in its entirety.

### FIELD

The present invention relates to the field of battery energy technology, and in particular to a battery pack and vehicle.

### BACKGROUND

In the prior art, in order to provide a battery pack with a large electric capacity, improve the endurance of electric vehicles, and save space occupied by the battery pack, two battery groups are usually arranged in the battery pack and stacked in layers.

However, the inventor found during research on the prior art that it is difficult to achieve effective gas-tight isolation between the two stacked battery groups. If one battery group becomes uncontrollable and ejects high-temperature and harmful gases or electrolytes, these may easily diffuse to the other battery group and cause damage, leading to complete failure or even explosion of the battery pack, which results in poor safety.

### SUMMARY

The present disclosure is intended to solve at least one of the technical problems existing in the prior art. Accordingly, one objective of the present disclosure is to provide a battery pack. In the battery pack, the first cavity of the first case body functions as an accommodation space for the first battery group, and the second cavity of the second case body functions as an accommodation space for the second battery group, so that the first battery group and the second battery group are separated in different spaces, which can achieve good gas-tight isolation between the first battery group and the second battery group.

The present disclosure further provides a vehicle equipped with the aforementioned battery pack.

The battery pack according to the present disclosure includes: a first battery group, a second battery group, a first case body, and a second case body; the first case body and the second case body being stacked, the first case body having a first cavity, the first battery group being accommodated in the first cavity, the second case body having a second cavity, and the second battery group being accommodated in the second cavity.

According to the battery pack of the present disclosure, the first cavity of the first case body functions as the accommodation space for the first battery group, and the second cavity of the second case body functions as the accommodation space for the second battery group. Due to the stacked arrangement of the first case body and the second case body, the first cavity and the second cavity are separated, so that the first battery group and the second battery group are separated in different spaces, which can achieve good gas-tight isolation between the first battery group and the second battery group. When one of the battery groups becomes uncontrollable and ejects high-temperature and harmful gases or electrolytes, it will not cause damage to the other battery group. This reduces the safety hazard of complete failure or even explosion of the battery pack, and improves the overall safety performance of the battery pack.

The vehicle according to the present disclosure includes the above-mentioned battery pack, therefore the vehicle is safe to use.

Additional aspects and advantages of the present disclosure will be partially presented in the following description, some of which will become apparent from the following description, or learned through practice of the present disclosure.

### BRIEF DESCRIPTION OF THE DRAWINGS

FIG. 1 is one of the partial structural schematic diagrams of a battery pack according to an embodiment of the present disclosure;
FIG. 2 is the second schematic diagram of a partial structure of a battery pack according to an embodiment of the present disclosure;
FIG. 3 is a schematic diagram of the structure of the first cavity of a battery pack according to an embodiment of the present disclosure;
FIG. 4 is a schematic diagram of the structure of the second cavity of a battery pack according to an embodiment of the present disclosure.

### Reference number:

10. first battery group; 20. second battery group; 30. first cavity; 40. second cavity; 50. first case body; 60. second case body; 51. first outer wall; 52. first bottom surface; 61. second outer wall; 62. second bottom surface; 70. fastener; 63. connection end; 53. connecting post; 64. through hole; 54. opening.

### DETAILED DESCRIPTION

The embodiments of the present disclosure are described in detail below, and examples of the embodiments are shown in the accompanying drawings, where identical or similar reference numerals from beginning to end represent identical or similar elements or elements with identical or similar functions. The embodiments described below with reference to the accompanying drawings are exemplary and are only used to explain the present disclosure, and should not be construed as limiting the present disclosure.

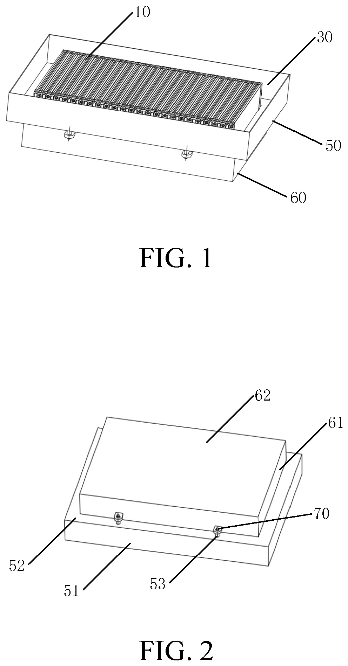

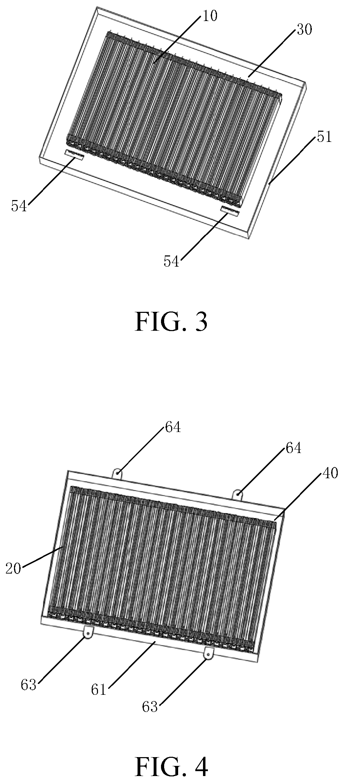

Referring to FIGS. 1 to 4, a schematic diagram of the structure of a battery pack according to an embodiment of the present disclosure is shown, which may specifically include: a first battery group 10, a second battery group 20, a first case body 50, and a second case body 60;
the first case body 50 and the second case body 60 are stacked. The first case body 50 has a first cavity 30, and the first battery group 10 is accommodated in the first cavity 30. The second case body 60 has a second cavity 40, and the second battery group 20 is accommodated in the second cavity 40.

In the embodiment of the present disclosure, the first cavity 30 of the first case body 50 functions as the accommodation space for the first battery group 10, and the second cavity 40 of the second case body 60 functions as the accommodation space for the second battery group 20. Due to the stacked arrangement of the first case body 50 and the second case body 60, the first cavity 30 and the second cavity 40 are separated, so that the first battery group 10 and the second battery group 20 are separated in different spaces, which can achieve good gas-tight isolation between the first battery group 10 and the second battery group 20. When one of the battery groups becomes uncontrollable and ejects high-temperature and harmful gases or electrolytes, it will not cause damage to the other battery group. This reduces the safety hazard of complete failure or even explosion of the battery pack, and improves the overall safety performance of the battery pack.

In the embodiment of the present disclosure, the first case body 50 and the second case body 60 may be distributed in a stacked manner along the vertical direction, so that the first cavity 30 and the second cavity 40 are also distributed in a stacked manner along the vertical direction. This allows the first battery group 10 and the second battery group 20 to be arranged in a stacked configuration, thereby enabling the battery pack to have a larger electric capacity, improving the endurance of the electric vehicle, and simultaneously saving the space occupied by the battery pack.

In the embodiment of the present disclosure, the first battery group 10 may be composed of at least one battery cell, and the second battery group 20 may also be composed of at least one battery cell, wherein adjacent battery cells are electrically connected. In an embodiment, the battery cell can be a lithium-ion battery cell, a polymer lithium battery cell, or a lithium iron phosphate battery cell, etc. The specific type of battery cell in this embodiment of the present disclosure is not limited.

For example, in the embodiments of the present disclosure, the first case body 50 and the second case body 60 can be formed by die casting, thereby providing the first case body 50 and the second case body 60 with good structural strength. The first case body 50 has a larger size than the second case body 60, enabling the second case body 60 to be stably attached to the first case body 50 and allowing the first case body 50 to function as a sealing surface for the second case body 60; thereby ensuring that the second case body 60 exhibits a good sealing effect. In addition, the dimensions of the first case body 50 can also be equal to those of the second case body 60, and this embodiment of the present disclosure is not limited to this.

In the embodiment of the present disclosure, the first case body 50 includes a first outer wall 51 and a first bottom surface 52 connected to the first outer wall 51, and the first outer wall 51 and the first bottom surface 52 together define the first cavity 30. In some embodiments, the first outer wall 51 is the entire side wall of the first case body 50, and the first outer wall 51 is wound around the periphery of the first bottom surface 52. In this way, the first battery group 10 can be attached to the first bottom surface 52. The first bottom surface 52 thereby defines a placement location for the first battery group 10. The first outer wall 51 can surround the perimeter of the first battery group 10, so that the first outer wall 51 and the first bottom surface 52 together define the first cavity 30 that accommodates the first battery group 10.

For example, in the embodiments of the present disclosure, the cross-sectional shape of the first outer wall 51 can be rectangular, square, circular, etc., which can be set according to actual needs. The specific shape of the first outer wall 51 in the embodiments of the present disclosure is not limited.

In the embodiment of the present disclosure, the second case body 60 includes a second outer wall 61 and a second bottom surface 62 connected to the second outer wall 61. The second outer wall 61 is connected to the first bottom surface 52, and the second outer wall 61 and the second bottom surface 62 together define the second cavity 40. In some embodiments, the second outer wall 61 is the entire side wall of the second case body 60, and the second outer wall 61 is wound around the periphery of the second bottom surface 62. In this way, the second battery group 20 can be attached to the second bottom surface 62. The second bottom surface 62 thereby defines a placement location for the second battery core module. The second outer wall 61 can surround the perimeter of the second battery group 20, so that the second outer wall 61 and the second bottom surface 62 together define the second cavity 40 that accommodates the second battery group 20. Moreover, the second outer wall 61 is connected to the first bottom surface 52, so that the first bottom surface 52 of the first case body 50, together with the second outer wall 61 and the second bottom surface 62, defines an enclosed space. This achieves effective gas-tight isolation for the second battery group 20.

For example, in the embodiments of the present disclosure, the cross-sectional shape of the second outer wall 61 can be rectangular, square, circular, etc., which can be set according to actual needs. The specific shape of the second outer wall 61 in the embodiments of the present disclosure is not limited.

In some optional embodiments of the present disclosure, the battery pack further includes fasteners 70; the fasteners 70 are respectively connected to the second outer wall 61 and the first bottom surface 52 to connect the second case body 60 to the first case body 50. In this way, the fastener 70 can firmly connect the second case body 60 to the first case body 50 by connecting the second outer wall 61 and the first bottom surface 52, ensuring good connection reliability between the first case body 50 and the second case body 60.

In some embodiments of the present disclosure, the second outer wall 61 has a connecting end 63, and the first bottom surface 52 has a connecting post 53; fastener 70 passes through connection end 63 and is embedded in connection post 53. In this way, the connecting end 63 serves as a connection point for the fastener 70, preventing damage to the integrity of the outer wall. In some embodiments, the connecting post 53 protrudes from the first bottom surface 52 and can be a common BOSS post, which can serve as a mounting location for the first case body 50. Thus, the fastener 70 passes through the connecting end 63 and is embedded in the connecting post 53, achieving a stable connection between the first case body 50 and the second case body 60.

In some embodiments of the present disclosure, the connecting post 53 has a mounting groove, and the fastener 70 is embedded in the mounting groove. In this way, the mounting groove serves as embedding space for the fastener 70, improving the reliability of the connection between the fastener 70 and the connecting post 53.

In some optional embodiments of the present disclosure, the groove wall of the mounting groove has a threaded structure, and at least some fasteners 70 are connected to the threaded structure by threads. In this way, the connection stability between the fastener 70 and the connecting post 53 is further improved through the threaded structure, preventing the fastener 70 from easily shifting within the mounting groove and becoming unstable.

In some embodiments of the present disclosure, the connecting end 63 extends away from the outer surface of the second outer wall 61, and the connecting post 53 extends towards the connecting end 63. In this way, the connecting end 63 protrudes from the second outer wall 61, which prevents it from interfering with the second outer wall 61 and also facilitates the fastener 70 passing through the connecting end 63. Furthermore, the connecting post 53 extends towards the connecting end 63, enabling the connecting post 53 and the connecting end 63 to be positioned at the same vertical level. This facilitates alignment, allowing the fastener 70 to pass through the connecting end 63 and be embedded in the connecting post 53.

In some embodiments of the present disclosure, the connecting end 63 has a through hole 64. The fastener 70 passes through the through hole 64, and the axis of the through hole 64 is collinear with the axis of the connecting post 53. The connecting end 63 has a through hole 64, allows the fastener 70 to pass through the connection end 63 with ease. Furthermore, the axis of the through hole 64 can be aligned with the axis of the connection post 53, which facilitates the positional alignment between the connection end 63 and the connection post 53, and reduces the risk of displacement affecting the reliability of fixation.

For example, in the embodiments of the present disclosure, the number of connection ends 63 may be multiple; with the multiple connection ends 63 arranged at intervals on the second outer wall 61. Correspondingly, the number of connecting posts 53 and the number of fasteners 70 may also be multiple. In some embodiments, one fastener 70 corresponds to and passes through one connecting end 63 and is embedded in one connecting post 53. The specific quantities of the connection ends 63, connection posts 53, and fastener 70 are not limited in the embodiments of the present application.

In the embodiments of the present disclosure, for example, fastener 70 is one of bolts, studs, or screws. It can be set according to actual needs, and the specific type of fastener 70 in this embodiment of the application is not limited.

In the embodiments of the present disclosure, the battery pack further includes a bus bar; the bus bar passes through the first bottom surface 52 and is electrically connected to the first battery group 10 and the second battery group 20, respectively. In this way, a relatively stable electrical connection between the first battery group 10 and the second battery group 20 is achieved through the bus bar.

In the embodiments of the present disclosure, the first bottom surface 52 has an opening 54, and the bus bar passes through the opening 54. In this way, the smooth and convenient passage of the bus bar on the first bottom surface 52 is achieved through the opening 54, thereby improving operational convenience.

In the embodiments of the present disclosure, the shape of the opening 54 can be rectangular or square, or trapezoidal, and can be set according to the shape of the bus bar. The specific shape of the opening 54 in the embodiments of the present disclosure is not limited.

In the embodiments of the present disclosure, for example, the number of openings 54 can be set to 1, 2, or 3, etc., with multiple openings 54 arranged adjacently or symmetrically, among other configurations. Correspondingly, the number of bus bars can also be set to 1, 2, 3, etc., where one bus bar corresponds to and passes through one opening 54. The specific quantities of openings 54 and bus bars, as well as the specific arrangement location of openings 54, are not limited in this embodiment of the application.

In some optional embodiments of the present disclosure, the battery pack further includes a sealing member; the sealing member is disposed around the periphery of the opening 54 to seal the opening 54. In this way, the sealing member seals the opening 54 through which the bus bar passes, thereby achieving better sealing between the first battery group 10 and the second battery group 20, further improving the gas-tight isolation of the first battery group 10 and the second battery group 20.

For example, in the embodiments of the present disclosure, the sealing member is one of seal or sealing cotton. For example, adhesive or foam can be used, as well as rubber or silicone, which have good sealing effects and are widely used and easy to obtain. The specific types of sealing components in this embodiment of the application may not be limited.

In some embodiments, the battery pack also includes a top cover; the top cover is connected to the side of the first case body 50 away from the second case body 60. In this way, the first case body 50 is sealed by the top cover, defining an enclosed space between the top cover and the first case body 50, in order to achieve good gas-tight isolation performance for the first battery group 10.

Optionally, in the embodiments of the present disclosure, the battery pack further includes a power distribution module; the power distribution module is disposed in at least one of the first cavity 30 and the second cavity 40. That is to say, the power distribution module can be set in the first cavity 30, the second cavity 40, or separately set in the first cavity 30 and the second cavity 40, and can be flexibly set according to actual needs. The specific setting position of the power distribution module in this embodiment of the application is not limited.

The present embodiment also provides a vehicle including a battery pack.

In some embodiments, the vehicle is an electric vehicle that is powered at least partially by a battery pack. For example, vehicles can include small cars, mid-size cars, three case body cars, trucks, trailers, CDVs (Car Derived Van), MPVs (Multi-Purpose Vehicles), SUVs (Sport Utility Vehicles), and so on. The specific types of vehicles in this application are not limited, and it is safer to use them according to the vehicle in this application.

In the description of this manual, the reference terms "one embodiment", "some embodiments", "illustrative embodiments", "examples", "specific examples", or "some examples" refer to the specific features, structures, materials, or characteristics described in conjunction with the embodiments or examples included in at least one embodiment or example of this application. In this manual, the illustrative expressions of the above terms may not necessarily refer to the same embodiments or examples. Moreover, the specific features, structures, materials, or characteristics described can be combined in any one or more embodiments or examples in a suitable manner.

Although the embodiments of the present disclosure have been shown and described, those of ordinary skill in the art can understand that various changes, modifications, substitutions, and variations can be made to these embodiments without departing from the principles and purposes of the present disclosure, and the scope of the present disclosure is limited by the claims and their equivalents.

## Claims

1. A battery pack, the battery pack comprising: a first battery group (10), a second battery group (20), a first case body (50), and a second case body (60);
the first case body (50) and the second case body (60) being stacked, the first case body (50) having a first cavity (30), the first battery group (10) being accommodated in the first cavity (30), the second case body (60) having a second cavity (40), and the second battery group (20) being accommodated in the second cavity (40).

2. The battery pack according to claim 1, wherein the first case body (50) comprises a first outer wall (51) and a first bottom surface (52) being connected to the first outer wall (51), and the first outer wall (51) and the first bottom surface (52) together defining the first cavity (30).

3. The battery pack according to claim 2, wherein the second case body (60) comprises a second outer wall (61) and a second bottom surface (62) being connected to the second outer wall (61), the second outer wall (61) being connected to the first bottom surface (52), and the second outer wall (61) and the second bottom surface (62) together defining the second cavity (40).

4. The battery pack according to claim 3, wherein the battery pack further comprises fasteners (70), the fasteners being respectively connected to the second outer wall (61) and the first bottom surface (52) to connect the second case body (60) to the first case body (50).

5. The battery pack according to claim 4, wherein the second outer wall (61) has a connecting end (63), the first bottom surface (52) has a connecting post (53);
the fastener (70) passing through the connecting end (63) and being embedded in the connecting post (53).

6. The battery pack according to claim 5, wherein the connecting post (53) has a mounting groove, the fastener (70) being embedded in the mounting groove.

7. The battery pack according to claim 6, wherein the groove wall of the mounting groove has a threaded structure, at least part of the fasteners (70) being connected to the threaded structure by threads.

8. The battery pack according to claim 7, wherein the connecting end (63) extends away from the outer surface of the second outer wall (61), the connecting post (53) extending towards the connecting end (63).

9. The battery pack according to claim 5, wherein the connecting end (63) has a through hole (64), the fastener (70) passing through the through hole (64), and the axis of the through hole (64) being collinear with the axis of the connecting post (53).

10. The battery pack according to claim 5, wherein the fastener (70) is one of bolts, studs, or screws.

11. The battery pack according to claim 2, wherein the battery pack further comprises a bus bar, the bus bar passing through the first bottom surface (52) and being electrically connected to the first battery group (10) and the second battery group (20) respectively.

12. The battery pack according to claim 11, wherein the first bottom surface (52) has an opening (54), the bus bar passing through the opening (54).

13. The battery pack according to claim 12, wherein the battery pack further comprises a sealing member, the sealing member being disposed around a periphery of the opening (54) to seal the opening (54).

14. The battery pack according to claim 13, wherein the sealing member is one of seal or sealing cotton.

15. The battery pack according to claim 1, wherein the battery pack further comprises a top cover, the top cover being connected to the side of the first case body (50) away from the second case body (60).

16. The battery pack according to claim 1, wherein the battery pack further comprises a power distribution module, the power distribution module being disposed in at least one of the first cavity (30) and the second cavity (40).

17. A vehicle, comprising a battery pack according to any one of claims 1 to 16.
